# EUROPÄISCHE PATENTSCHRIFT

(11) **EP 3 819 147 B1**
(45) Veröffentlichungstag und Bekanntmachung des Hinweises auf die Patenterteilung: **27.04.2022**
(21) Anmeldenummer: 19208264.2
(22) Anmeldetag: 11.11.2019
(51) Int. Cl.: B60J 11/04

(54) **TRANSPORT- UND/ODER LAGERUNGSABDECKUNG FÜR ELEKTROFAHRZEUGE**
TRANSPORT AND/OR STORAGE COVER FOR ELECTRICAL VEHICLES
DISPOSITIF DE PROTECTIONS POUR TRANSPORT ET/OU STOCKAGE POUR DES VÉHICULES ÉLECTRIQUE

(43) Veröffentlichungstag der Anmeldung: 12.05.2021
(73) Patentinhaber: IBENA Textilwerke GmbH, 46395 Bocholt (DE)
(72) Erfinder: SMEULDERS, Britta, 7131 WD Lichtenvoorde (NL); TATSCH, Oliver, 46397 Bocholt (DE); ZIEVERINK, Hank, 4105 EW Culemborg (NL)
(74) Vertreter: Hoffmann Eitle

(56) Entgegenhaltungen:
- EP-A1- 2 423 358
- DE-U1-202018 005 624
- US-A- 4 315 535
- US-B1- 6 517 141

## Beschreibung

### TECHNISCHES GEBIET

Die Erfindung betrifft eine Transport- und/oder Lagerungsabdeckung für Elektrofahrzeuge, zu denen auch Hybridfahrzeuge, typischerweise mit einem Lithium-Ionen Akku gehören.

Insbesondere wenn derartige Fahrzeuge beispielsweise infolge eines Unfalls beschädigt wurden, besteht die Gefahr, dass der Akku explodiert, was zu erheblichen Gefahren für Personen, beispielsweise im Rahmen der Bergung eines derartigen Unfallfahrzeugs, führt.

### STAND DER TECHNIK

Aus der CN 106693233 A geht eine Abdeckung hervor, die dafür vorgesehen ist, ein brennendes Fahrzeug zu löschen.

Die US 6517141 B1 betrifft eine wasserdichte Hülle für ein Fahrzeug die mehrere flächige, miteinander verbindbare Abschnitte aufweist. Eine ähnliche Anordnung geht aus der US 4315535 A1 hervor.

Die DE 20 2018 005 624 U1 betrifft ein sogenanntes Sicherheitsgerät für den Transport von verunfallten Elektrofahrzeugen, das vollumfänglich eine Barriere für Feststoffpartikel ausbildet. Schließlich geht aus der CN 108297991 eine ähnliche Abdeckung hervor, bei der sich im Inneren eine metallene Verstärkung befindet.

### DARSTELLUNG DER ERFINDUNG

Vor diesem Hintergrund liegt der Erfindung die Aufgabe zugrunde, eine zuverlässige Transport- und/oder Lagerungsabdeckung für Elektrofahrzeuge zu schaffen, die leicht zu handhaben ist.

Die Lösung dieser Aufgabe erfolgt durch den Gegenstand des Patentanspruchs 1.

Demzufolge ist die erfindungsgemäße Abdeckung zum einen geeignet, ein beispielsweise verunfalltes Elektrofahrzeug im Wesentlichen vollständig zu umschließen und besteht zum anderen aus mehreren flächigen Abschnitten, die miteinander verbindbar sind. Um den Anforderungen zu genügen, weist eine derartige Abdeckung bevorzugt verschiedene Schichten und Bestandteile auf, wie nachfolgend genauer beschrieben, die zu einem erheblichen Gesamtgewicht führen. Um die Abdeckung dennoch leicht, insbesondere durch eine einzige Person handhabbar auszuführen, ist erfindungsgemäß vorgesehen, diese in mehrere flächige Abschnitte zu unterteilen, die miteinander derart verbindbar sind, dass umgebende Personen vor den Folgen einer Explosion des Akkus oder der Batterie, geschützt sind. Gleichzeitig ist die erfindungsgemäße Abdeckung typischerweise gasdurchlässig, so dass Explosionsgase abgegeben werden können.

Darüber hinaus hat sich insbesondere für eine mehrinsbesondere dreilagige Gestaltung einer erfindungsgemäßen Abdeckung, wie nachfolgend detailliert beschrieben, herausgestellt, dass sie in vorteilhafter Weise gegen den im Fall einer Explosion oder einer Verpuffung auftretenden Berstdruck widerstandsfähig ist.

Erste Simulationen haben beispielsweise für den Bodenabschnitt ein Gewicht von 40 kg, und für die drei anderen genannten Abschnitte von jeweils etwa 20 kg ergeben, so dass die einzelnen Abschnitte ohne weiteres von einer einzigen Person zu handhaben sind.

Im Hinblick auf die Größe kann die erfindungsgemäße Abdeckung an ein größtmögliches, zu transportierendes Fahrzeug, beispielsweise ein SUV angepasst sein. Wenn demgegenüber ein kleineres Fahrzeug mit der erfindungsgemäßen Abdeckung zu versehen ist, können die einzelnen Abschnitte entsprechend ein- oder umgeschlagen werden.

Ergänzend sei erwähnt, dass in vorteilhafter Weise auch ein "eingepacktes" Fahrzeug von einem Kran auf ein geeignetes Abschleppfahrzeug oder von diesem heruntergehoben werden kann.

Insbesondere für den Bodenabschnitt, jedoch gleichermaßen für die anderen Abschnitte, die in einer "Unfallumgebung" gehandhabt werden müssen, hat es sich für die dauerhafte Beständigkeit als vorteilhaft erwiesen, an einer Außenschicht ein Gewebe, ein Gitter oder ein Gestrick mit Stahldraht oder
- filamenten vorzusehen. Diese Maßnahme nutzt die Dehnbarkeit und Flexibilität von Stahl, um die Abschnitte der Abdeckung weiterhin flexibel auszuführen und diese handhabbar zu machen. Darüber hinaus schützt der Stahldraht oder die
- filamente gegen Abrieb und behält in vorteilhafterweise auch bei hohen Temperaturen, die bei einer Fahrzeugexplosion oder einem -brand auftreten können, eine hohe Reißkraft. Beispielsweise für ein Stahlgestrick wird derzeit ein Flächengewicht von 160 bis 190 g/m², insbesondere 170 bis 175 g/m² und/oder eine Reißfestigkeit von 890 bis 910 N, insbesondere 900 bis 905 N und/oder eine Dehnung von 94 bis 98 %, insbesondere etwa 96 % bevorzugt. Die Stahlfilamente können beispielsweise von Bekinox (eingetragene Marke) sein und mit Filamenten der Marke Dyneema (ein HM Polyethylen) und/oder Polyamidfilamenten beispielsweise der Marke Kevlar versponnen sein. Die Stahlfilamente können hierbei einen Gewichts-Anteil von 25 bis 30, insbesondere 28 %, die Polyamidfilamente einen Anteil von 15 bis 20, insbesondere 18 % und die HM Polyethylenfilamente einen Anteil von 50 bis 60, insbesondere 54 % aufweisen. Ein beispielhaftes, für das Gewebe, Gitter oder Gestrick verwendete Garn weist eine Feinheit von 18 Nm auf und/oder eine Reißkraft von 5000 cN und/oder 90 cN/Tex auf.

Für eine mittlere Schicht wird ein Glasvlies mit einer Dicke von etwa 8 bis 12, insbesondere etwa 10 mm verwendet. Ein derartiges Vlies, das Silika- und/oder Glasfasern aufweisen kann, bietet einen vorteilhaften Temperaturschutz für die vorangehend beschriebene Außenschicht, da insbesondere verhindert werden kann, dass Flammen bis zur äußeren Schicht durchschlagen. Das Glasfaservlies kann beispielsweise ein Flächengewicht von etwa 890 bis 910 g/m² und beispielsweise etwa 900 g/m² aufweisen und beispielsweise als Silikatmatte von Lippmann GmbH in Schwerte bezogen werden.

Wie bereits angedeutet, ist die erfindungsgemäße Abdeckung insgesamt gasdurchlässig, um Explosionsgase abgeben zu können.

Bevorzugte Weiterbildungen sind in den weiteren Ansprüchen beschrieben.

Für die Aufteilung der erfindungsgemäßen Abdeckung in einzelne Abschnitte hat es sich als günstig erwiesen, einzelne Abschnitte an die Bodenfläche, gewissermaßen den "Grundriss" eines Fahrzeugs, an das Dach einschließlich Motorhaube, geneigter Scheiben und Kofferraumdeckel und/oder die Seitenansicht eines Fahrzeugs anzupassen. Typischerweise wird das Fahrzeug auf den Bodenabschnitt geschoben. Zu diesem Zweck kann der Bodenabschnitt an einem geeigneten Abschlepp- oder Transportfahrzeug befestigbar sein. Nachfolgend wird beispielsweise ein Dachabschnitt angebracht, gegebenenfalls eingeschlagen, um ihn an die tatsächliche Größe des Fahrzeugs anzupassen, und abschließend werden beispielsweise die beiden Seitenabschnitte mit den beiden vorangehend genannten Abschnitten verbunden. Insgesamt entsteht somit die das Fahrzeug vollständig umschließende Abdeckung.

Da vor diesem Hintergrund der Bodenabschnitt besonderen Belastungen infolge des Eigengewichts des Fahrzeugs ausgesetzt ist, wird für diesen bevorzugt, dass er eine zusätzliche Beschichtung, insbesondere eine Keramikbeschichtung mit einer Dicke von deutlich unter 1 mm aufweist.

In diesem Zusammenhang sei zu einem im Rahmen der vorliegenden verwendeten Gestrick aus hochfesten und/oder hochdehnbaren Filamenten und/oder Garnen erwähnt, dass hierbei in vorteilhafter Weise die konstruktive Dehnbarkeit eines Gestricks verwendet wird, um dem bei einer Explosion oder einer Verpuffung auftretenden Berstdruck in vorteilhafter Weise standzuhalten. Ein derartiges Gestrick weist eine Festigkeit von mehr als 10000 cN auf. Demnach besteht ein von der erfindungsgemäßen Mehrteiligkeit unabhängiger Gesichtspunkt darin, in der hierin beschriebenen Abdeckung ein Gestrick aus einem hochfesten Garn zu verwenden. Dieser Aspekt kann mit sämtlichen vorangehend und nachfolgend beschriebenen Merkmalen kombiniert werden.

Bei ersten Versuchen hat es sich für eine äußere Schicht der erfindungsgemäßen Abdeckung ferner als vorteilhaft erwiesen, dass diese hochfestes und/oder hochdichtes Polyethylen und/oder HM (High Modulus) Polyethylen und/oder PPTA beispielsweise der Marke Kevlar aufweist. Diese Materialien können, wie oben beschrieben, mit Metall- insbesondere Stahlfilamenten versponnen und zu einem Gewebe, Gitter oder Gestrick verarbeitet sein.

Für eine innere Schicht wird derzeit bevorzugt, dass diese Meta- und/oder Para-Aramid und/oder Viscose FR aufweist. Ein typisches Gewebe besteht aus 59 bis 60 % Meta- und Para-Aramid, insbesondere 59,5 % davon, und 40 bis 41%, insbesondere 40,5 % Viscose FR. Viscose FR bietet darüber hinaus den Vorteil, dass es im Fall einer Explosion oder eines Brandes Gase absondert, die Sauerstoff verdrängen, so dass ein gewisser Selbstlösch-Effekt genutzt werden kann. Für die beschriebene innerste Lage wird eine Höchstzugkraft gemäß DIN EN ISO 13934-1:2013 in der Kettrichtung von zumindest 1700 N/5 cm und in der Schussrichtung von zumindest 1100 bevorzugt. Für die Dehnung gemäß DIN EN ISO 13934-1:2013 wird für die Kettrichtung ein Wert von zumindest 15 %, und für die Schussrichtung zumindest 18 % bevorzugt. Die Weitereißfestigkeit gemäß DIN EN ISO 13937-2:2000 beträgt in Kett- und/oder Schussrichtung zumindest 50 N. Ein typisches Flächengewicht der beschriebenen, innersten Schicht, die auch als Futter bezeichnet werden kann, liegt bei 300 bis 350 g/m², insbesondere bei etwa 330 g/m².

Für die innerste Schicht wird darüber hinaus für die Gasdurchlässigkeit der Abdeckung insgesamt bevorzugt, dass diese perforiert ist.

Bei ersten Versuchen hat sich ferner eine Beschichtung der beschriebenen innersten Schicht zur mittleren Schicht hin als vorteilhaft erwiesen, um hier die Reib- und/oder Scheuerbeständigkeit zu verbessern. Diese Beschichtung kann Silika und/oder Silikon aufweisen. Das Flächengewicht liegt dann bei 400 bis 450 g/m², insbesondere bei etwa 430 g/m².

Bevorzugt sind einzelne, und insbesondere sämtliche vorhandenen Schichten mittels eines Steppverbundes verbunden, so dass die einzelnen Abschnitte der erfindungsgemäßen Abdeckung zuverlässig sicher gehandhabt werden können.

Für die Verbindung zwischen den einzelnen Abschnitten werden derzeit Klett- und/oder Reißverschlüsse bevorzugt. Klettverschlüsse bieten den Vorteil, dass sie gegen Druckwellen, die beispielsweise bei einer Explosion auftreten können, beständiger sind. Demgegenüber sind Reißverschlüsse leichter zu handhaben.

Die Handhabbarkeit wird weiter verbessert, wenn, wie bevorzugt, an den Verbindungstellen zwischen den einzelnen Abschnitten Klettbänder oder Reißverschlüsse mit übereinstimmenden Farben vorgesehen sind, so dass stets leicht erkennbar ist, wie die einzelnen Abschnitte miteinander zu verbinden sind.

Nachdem sich die erfindungsgemäße Abdeckung auch als Lagerungsabdeckung eignet, weist diese bevorzugt einen Wärmesensor auf, so dass ein Brand in geeigneter Weise angezeigt werden kann. Es ist nämlich zu beachten, dass Batterien und Akkus von verunfallten Elektro- oder Hybridfahrzeugen auch noch einige Tage nach dem eigentlichen Unfall explodieren können, so dass sie am Abstellort bislang in "Quarantäne" bleiben müssen, um Gefahren für in der Umgebung befindliche Personen oder Gegenstände zu verhindern. Die erfindungsgemäße Abdeckung gewährleistet hier die notwendige Sicherheit, ohne dass besondere Abstände zu Personen oder Gegenständen eingehalten werden müssen.

## Patentansprüche

1. Dreilagige Transport- und/oder Lagerungsabdeckung für Elektrofahrzeuge als Explosions- und/oder Brandschutz, die geeignet ist, ein Fahrzeug im Wesentlichen vollständig zu umschließen und aus mehreren flächigen Abschnitten besteht, die miteinander verbindbar sind, wobei
an einer Außenschicht zumindest eines Abschnitts ein Gewebe, ein Gitter oder ein Gestrick mit Stahldraht oder -filamenten vorgesehen ist,
eine mittlere Schicht ein Glasfaservlies mit einer Dicke von 8 bis 12, insbesondere etwa 10 mm aufweist, und
die Abdeckung insgesamt gasdurchlässig ist.

2. Abdeckung nach Anspruch 1, **dadurch gekennzeichnet, dass** einzelne Abschnitte an eine Bodenfläche, ein Dach und/oder eine Seite eines Fahrzeugs angepasst sind.

3. Abdeckung nach Anspruch 2, **dadurch gekennzeichnet, dass** ein an eine Bodenfläche angepasster Abschnitt eine zusätzliche Beschichtung aufweist.

4. Abdeckung nach einem der vorangehenden Ansprüche, **dadurch gekennzeichnet, dass** eine äußere Schicht, insbesondere ein dort vorgesehenes Gewebe, Gitter oder Gestrick, ferner hochfestes Polyethylen und/oder hochdichtes Polyethylen und/oder HM (High Modulus) Polyethylen und/oder PPTA aufweist.

5. Abdeckung nach einem der vorangehenden Ansprüche, **dadurch gekennzeichnet, dass**
eine innere Schicht Meta- und/oder Para-Aramid und/oder Viscose FR aufweist.

6. Abdeckung nach einem der vorangehenden Ansprüche, **dadurch gekennzeichnet, dass** eine innere Schicht perforiert ist.

7. Abdeckung nach einem der vorangehenden Ansprüche, **dadurch gekennzeichnet, dass** eine innere Schicht zur mittleren Schicht hin, beschichtet, insbesondere mit einer Keramikbeschichtung beschichtet ist.

8. Abdeckung nach einem der vorangehenden Ansprüche, **dadurch gekennzeichnet, dass** einzelne, bevorzugt sämtliche Schichten zumindest eines Abschnitts mittels eines Steppverbundes verbunden sind.

9. Abdeckung nach einem der vorangehenden Ansprüche, **dadurch gekennzeichnet, dass** die einzelnen Abschnitte mittels Klett- und/oder Reißverschlüssen verbindbar sind.

10. Abdeckung nach Anspruch 9, **dadurch gekennzeichnet, dass** an vorgesehenen Verbindungsstellen Klettbänder oder Reißverschlüsse mit übereinstimmenden Farben vorgesehen sind.

11. Abdeckung nach einem der vorangehenden Ansprüche, **dadurch gekennzeichnet, dass** diese ferner an ihrer Innenseite zumindest einen Temperatursensor aufweist.

## Claims

1. Triple-layered transport and/or storage cover for electrical vehicles as protection against explosion and/or fire, which is suitable for enclosing a vehicle substantially completely and consists of several two-dimensional portions which are connectable to one another, wherein
on one outer layer of at least one portion a textile, a mesh or a knitted fabric with steel wire or steel filaments is provided,
a middle layer has a glass fibre nonwoven with a thickness of 8 to 12, in particular approximately 10 mm, and
the cover is as a whole gas-permeable.

2. Cover according to claim 1, **characterised in that** individual portions are adapted to a floor surface, a roof and/or a side of a vehicle.

3. Cover according to claim 2, **characterised in that** a portion adapted to a floor surface has an additional coating.

4. Cover according to any of the preceding claims, **characterised in that** an outer layer, in particular a textile, mesh or knitted fabric provided there, furthermore has highstrength polyethylene and/or high-density polyethylene and/or HM (high-modulus) polyethylene and/or PPTA.

5. Cover according to any of the preceding claims, **characterised in that** an inner layer has meta-aramid and/or para-aramid and/or FR viscose.

6. Cover according to any of the preceding claims, **characterised in that** an inner layer is perforated.

7. Cover according to any of the preceding claims, **characterised in that** an inner layer is coated, in particular coated with a ceramic coating, towards the middle layer.

8. Cover according to any of the preceding claims, **characterised in that** individual, preferably all layers of at least one portion are connected by means of a quilting composite.

9. Cover according to any of the preceding claims, **characterised in that** the individual portions are connectable by means of hook-and-loop fasteners and/or zip fasteners.

10. Cover according to claim 9, **characterised in that** hook-and-loop strips or zip fasteners with corresponding colours are provided at intended connection points.

11. Cover according to any of the preceding claims, **characterised in that** it furthermore has at least one temperature sensor on its inner side.

## Revendications

1. Revêtement de transport et/ou de stockage triple couche pour des véhicules électriques en guise de protection anti-explosion et/ou anti-incendie qui est adapté pour envelopper un véhicule sensiblement entièrement et qui se compose de plusieurs sections plates qui peuvent être reliées les unes aux autres,
dans lequel
au niveau d'une couche extérieure d'au moins une section est prévu(e) une toile, un treillage ou un enchevêtrement de fils ou de filaments d'acier,
une couche intermédiaire présente un non-tissé en fibres de verre d'une épaisseur de 8 à 12, en particulier d'environ 10 mm, et
le revêtement est globalement perméable au gaz.

2. Revêtement selon la revendication 1, **caractérisé en ce que** des sections individuelles sont adaptées à une surface de plancher, un toit et/ou un côté du véhicule.

3. Revêtement selon la revendication 2, **caractérisé en ce qu'**une section adaptée à une surface de plancher comporte un revêtement supplémentaire.

4. Revêtement selon l'une quelconque des revendications précédentes, **caractérisé en ce qu'**une couche extérieure, en particulier une toile, un treillage ou un enchevêtrement de fils prévus à cet endroit, présente du polyéthylène haute résistance et/ou du polyéthylène haute densité et/ou du polyéthylène HM (High Modulus) et/ou des PPTA.

5. Revêtement selon l'une quelconque des revendications précédentes, **caractérisé en ce qu'**une couche intérieure présente du méta-aramide et/ou du para-aramide et/ou du viscose FR.

6. Revêtement selon l'une quelconque des revendications précédentes, **caractérisé en ce qu'**une couche intérieure est perforée.

7. Revêtement selon l'une quelconque des revendications précédentes, **caractérisé en ce qu'**une couche intérieure en direction de la couche intermédiaire est revêtue, en particulier est revêtue avec un revêtement céramique.

8. Revêtement selon l'une quelconque des revendications précédentes, **caractérisé en ce que** des couches individuelles, de préférence toutes les couches d'au moins une section sont reliées au moyen d'un composite matelassé.

9. Revêtement selon l'une quelconque des revendications précédentes, **caractérisé en ce que** les couches individuelles peuvent être reliées au moyen de fermetures Velcro et/ou de fermetures éclair.

10. Revêtement selon la revendication 9, **caractérisé en ce que** des sangles Velcro ou des fermetures éclair avec des couleurs correspondantes sont prévues aux endroits de liaison prévus.

11. Revêtement selon l'une quelconque des revendications précédentes, **caractérisé en ce que** celui-ci présente de plus sur sa face interne au moins un capteur de température.
